# EUROPEAN PATENT APPLICATION

(11) **EP 4 585 365 A1**
(43) Date of publication of application: **16.07.2025**
(21) Application number: 22958057.6
(22) Date of filing: 06.09.2022
(51) Int. Cl.: B23Q 17/09, B23Q 17/00

(54) **STATE DETECTION SYSTEM, METHOD, AND PROGRAM**

(71) Applicant: SUMITOMO ELECTRIC INDUSTRIES, LTD., Osaka-shi, Osaka 541-0041 (JP)
(72) Inventor: KOIKE, Yusuke, Osaka-shi, Osaka 541-0041 (JP)
(74) Representative: Boult Wade Tennant LLP
(86) International application number: PCT/JP2022/033385
(87) International publication number: WO 2024/052978

(57) **Abstract**

A state detection system for a milling tool used for milling includes: a milling tool including a shaft portion having a first end portion and a second end portion, the milling tool being rotatable about a rotation axis of the shaft portion; a plurality of sensors attached to the shaft portion to detect an external force acting on the milling tool; a display device; and a management device. The plurality of sensors detect a first force acting on the milling tool in a first direction along the rotation axis, a second force acting on the milling tool in a direction along a plane normal to the rotation axis, and a load torque acting on the milling tool in a direction for preventing rotation of the milling tool. The management device causes the display device to display first information based on at least two of the first force, the second force, and the load torque.

## Description

### TECHNICAL FIELD

The present disclosure relates to a state detection system, a state detection method, and a state detection program.

### BACKGROUND ART

In recent years, a system for detecting the state of a milling tool under various milling conditions has been demanded. Japanese Patent Laying-Open No. S59-142048 (PTL 1) discloses a tool abnormality detection device for detecting an abnormality occurring in a tool based on the mutual relation among a main force, a feed force, and a back force generated during cutting. Japanese Patent Laying-Open No. S58-217247 (PTL 2) discloses an abnormal phenomenon monitoring method for determining a defect by calculating a cutting force ratio of a main force, a feed force, and a back force and also calculating a differential coefficient of the cutting force ratio to time. Japanese Patent Laying-Open No. H09-076144 (PTL 3) discloses a machining state monitoring method for monitoring a machining state by detecting loads on an X-axis and a Y-axis during drilling by a machine tool.

### CITATION LIST

### PATENT LITERATURE

PTL 1: Japanese Patent Laying-Open No. S59-142048
PTL 2: Japanese Patent Laying-Open No. S58-217247
PTL 3: Japanese Patent Laying-Open No. H09-076144

### SUMMARY OF INVENTION

A state detection system for a milling tool used for milling according to the present disclosure includes: a milling tool including a shaft portion, the milling tool being rotatable about a rotation axis of the shaft portion, the shaft portion having a first end portion provided with a cutting portion for cutting a workpiece and a second end portion attached to a machine tool; a plurality of sensors attached to the shaft portion to detect an external force acting on the milling tool; a display device; and a management device. The plurality of sensors are configured to detect: a first force acting on the milling tool in a first direction along the rotation axis; a second force acting on the milling tool in a direction along a plane normal to the rotation axis; and a load torque acting on the milling tool in a direction for preventing rotation of the milling tool. The management device is configured to cause the display device to display information based on at least two of the first force, the second force, and the load torque.

### BRIEF DESCRIPTION OF DRAWINGS

Fig. 1 is a schematic diagram of a state detection system for a milling tool according to a present embodiment.
Fig. 2 is a perspective view of the milling tool.
Fig. 3 is a diagram of the milling tool in Fig. 2 as viewed from the side of a negative direction along a Y-axis.
Fig. 4 is a diagram of the milling tool in Fig. 2 as viewed from the side of a positive direction along an X-axis.
Fig. 5 is a diagram of a shaft portion in Fig. 2 as viewed from the side of a positive direction along a Z-axis.
Fig. 6 is a diagram of a free end of a shaft portion 106 in Fig. 2 as viewed from the side of the positive direction along the Z-axis.
Fig. 7 is a diagram showing a relation between external forces Fx, Fy, and Fz and a state of a cutting portion.
Fig. 8 is a first example of a graph showing a state of the milling tool.
Fig. 9 is a second example of the graph showing the state of the milling tool.
Fig. 10 is a third example of the graph showing the state of the milling tool.
Fig. 11 is a fourth example of the graph showing the state of the milling tool.
Fig. 12 is a fifth example of the graph showing the state of the milling tool.
Fig. 13 is a sixth example of the graph showing the state of the milling tool.
Fig. 14 illustrates a relation among an external force, a specific cutting resistance, and a cutting area.
Fig. 15 is a diagram for illustrating a relation between a load torque and a cutting area.
Fig. 16 is a seventh example of the graph showing the state of the milling tool.
Fig. 17 is an eighth example of the graph showing the state of the milling tool.
Fig. 18 is a flowchart illustrating a processing procedure in the present embodiment.
Fig. 19 is a diagram showing measurement results of a test for creating a normal region.
Fig. 20 is a diagram showing graphs based on the measurement results in Fig. 19.
Fig. 21 is a diagram showing an example in which a normal region in a duration Dr2 is set.
Fig. 22 is a diagram showing an example in which normal regions in durations Dr2 and Dr3 are set.

### DETAILED DESCRIPTION

### [Problem to be Solved by the Present Disclosure]

An object of the present disclosure is to provide a state detection system that detects a state of a milling tool used for milling.

### [Advantageous Effect of the Present Disclosure]

According to the present disclosure, a state detection system can be provided that is capable of detecting the state of the milling tool used for determining an abnormality in the milling tool based on an external force acting on the milling tool in a direction along the rotation axis, an external force acting on the milling tool in a direction along a plane normal to the rotation axis, and a load torque acting on the milling tool in a direction for preventing rotation.

### [Description of Embodiments]

First, embodiments of the present disclosure will be listed and described.
(1) A state detection system for a milling tool used for milling according to the present disclosure includes: a milling tool including a shaft portion, the milling tool being rotatable about a rotation axis of the shaft portion, the shaft portion having a first end portion provided with a cutting portion for cutting a workpiece and a second end portion attached to a machine tool; a plurality of sensors attached to the shaft portion to detect an external force acting on the milling tool; a display device; and a management device. The plurality of sensors are configured to detect: a first force acting on the milling tool in a first direction along the rotation axis; a second force acting on the milling tool in a direction along a plane normal to the rotation axis; and a load torque acting on the milling tool in a direction for preventing rotation of the milling tool. The management device is configured to cause the display device to display first information based on at least two of the first force, the second force, and the load torque.
(2) In the state detection system according to the above (1), the management device is configured to cause the first information to be displayed with use of a graph.
(3) In the state detection system according to the above (1) or (2), in addition to the first information, the management device is configured to cause the display device to display second information based on at least two of the first force, the second force, and the load torque. The second information is different from the first information.
(4) In the state detection system according to the above (1), the first information is information based on a ratio of the first force to the load torque and a ratio of the second force to the load torque.
(5) In the state detection system according to any one of the above (1) to (4), the plurality of sensors include: a first strain sensor, a second strain sensor, and a third strain sensor that detect a strain in the first direction, the first strain sensor, the second strain sensor, and the third strain sensor being attached to the shaft portion; and a fourth strain sensor that detects a circumferential strain of the shaft portion, the fourth strain sensor being attached to the shaft portion.
(6) A method according to the present disclosure is a method of detecting a state of a milling tool used for milling. The milling tool includes a shaft portion, the milling tool is rotatable about a rotation axis of the shaft portion, and the shaft portion has a first end portion provided with a cutting portion for cutting a workpiece and a second end portion attached to a machine tool. A plurality of sensors that detect an external force acting on the milling tool are attached to the shaft portion. The method includes: acquiring a first force with use of detection values from the plurality of sensors, the first force acting in a first direction along the rotation axis; acquiring a second force with use of the detection values from the plurality of sensors, the second force acting in a direction along a plane normal to the rotation axis; acquiring a load torque with use of the detection values from the plurality of sensors, the load torque acting in a direction for preventing rotation of the milling tool; and causing first information to be displayed based on at least two of the first force, the second force, and the load torque.
(7) A program according to the present disclosure is a program for detecting a state of a milling tool used for milling. The milling tool includes a shaft portion, the milling tool is rotatable about a rotation axis of the shaft portion, and the shaft portion has a first end portion provided with a cutting portion for cutting a workpiece and a second end portion attached to a machine tool. A plurality of sensors that detect an external force acting on the milling tool are attached to the shaft portion. The program causes a computer to perform: acquiring a first force with use of detection values from the plurality of sensors, the first force acting in a first direction along the rotation axis; acquiring a second force acting in a direction along a plane normal to the rotation axis; acquiring a load torque acting in a direction for preventing rotation of the milling tool; and causing first information to be displayed based on at least two of the first force, the second force, and the load torque.

### [Details of Embodiments of the Present Disclosure]

Hereinafter, embodiments of the present disclosure will be described in detail with reference to the accompanying drawings, in which the same or corresponding portions are denoted by the same reference characters, and the description thereof will not be repeated.

### (Overview of State Detection System)

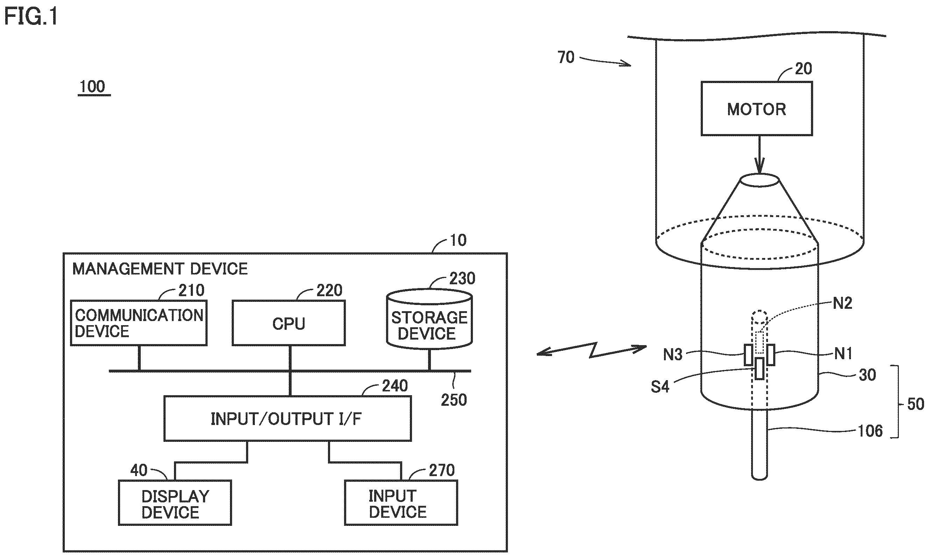

Fig. 1 is a schematic diagram of a state detection system 100 for a milling tool 50 according to the present embodiment. State detection system 100 for milling tool 50 in Fig. 1 may be applicable to a milling tool of a machine tool such as a machining center or a milling machine. State detection system 100 includes a management device 10 and a machine tool 70. Machine tool 70 includes a motor 20 and milling tool 50.

Milling tool 50 serves to cut a fixed workpiece and is used in a machine tool such as a machining center or a milling machine. Milling tool 50 in the present embodiment is an end mill. Milling tool 50 may be other than an end mill and may be, for example, a drill or a milling cutter. Milling tool 50 includes a shaft portion 106 provided with a cutting portion. Milling tool 50 is attached to machine tool 70 with a tool holder 30 interposed therebetween, tool holder 30 being configured to hold shaft portion 106. In other words, the cutting portion is provided at an end portion of shaft portion 106 on the lower side in the vertical direction, and an end portion of shaft portion 106 on the upper side in the vertical direction is attached to tool holder 30 on the machine tool 70 side. The end portion of shaft portion 106 on the lower side in the vertical direction is an example of the "first end portion" in the present disclosure, and the end portion of shaft portion 106 on the upper side in the vertical direction is an example of the "second end portion" in the present disclosure. Tool holder 30 may be formed at the end portion of shaft portion 106 on the upper side in the vertical direction. In that case, milling tool 50 includes tool holder 30.

Tool holder 30 is connected to shaft portion 106 and supports shaft portion 106 from above in the vertical direction. Tool holder 30 has a conical end portion on the side of a positive direction along a Z-axis, and the conical end portion is attached to machine tool 70. Motor 20 included in machine tool 70 integrally rotates milling tool 50. In other words, motor 20 rotationally drives milling tool 50. Motor 20 is, for example, a servo motor.

Milling tool 50 that is an end mill in the present embodiment has at least one cutting portion. When motor 20 is driven to rotate milling tool 50, the cutting portion of milling tool 50 comes into contact with the surface of the workpiece, so that the surface of the workpiece is scraped off. Thereby, the workpiece is formed to have a shape desired by the user.

Strain sensors N1 to N3 and S4 are attached to shaft portion 106. Each of strain sensors N1 to N3 and S4 is capable of detecting a strain occurring in shaft portion 106 and is, for example, a strain gauge configured of a bridge circuit. Each of strain sensors N1 to N3 and S4 is wirelessly connected to management device 10 and transmits a value detected thereby to management device 10.

Management device 10 detects the state of milling tool 50 with use of detection values from strain sensors N1 to N3 and S4 attached to milling tool 50. Management device 10 includes a communication device 210, a central processing unit (CPU) 220 serving as a controller, a storage device 230, an input/output interface (I/F) 240, a display device 40, and an input device 270.

Communication device 210, CPU 220, storage device 230, and input/output I/F 240 are connected to a common bus 250 and configured to be capable of exchanging signals with each other. A display device 260 and input device 270 are connected to input/output I/F 240 through a wire or wirelessly.

Communication device 210, which is a wireless communication device, wirelessly acquires the detection values from strain sensors N1 to N3 and S4 attached to tool holder 30. CPU 220 executes a program stored in storage device 230, processes the detection values from strain sensors N1 to N3 and S4 that have been acquired by communication device 210, and thereby detects the state of milling tool 50.

Storage device 230 includes a memory such as a read only memory (ROM) and a random access memory (RAM), and a large-capacity storage device such as a hard disc drive (HDD) or a solid state disk (SSD). Storage device 230 is used as a buffer during processing by CPU 220 and also used to store a program executed by CPU 220, the detection values from strain sensors N1 to N3 and S4, calculation results by CPU 220, and/or the like.

Input device 270 is, for example, a pointing device such as a keyboard, a mouse, a trackball, or a touch panel, and receives an operation signal from a user. Display device 40, which is typically a liquid crystal panel or an organic electroluminescence (EL) panel, displays the calculation result by CPU 220 and the information stored in storage device 230 to the user. In the present embodiment, management device 10 causes display device 40 to display the information based on the detection values from strain sensors N1 to N3 and S4 to thereby allow the user to recognize the state of milling tool 50.

Input/output I/F 240 serves as an interface through which display device 40 and input device 270 are connected. Through input/output I/F 240, a user operation signal from input device 270 is received and the information to be given to the user is output to display device 40.

### (Details of Strain Sensors)

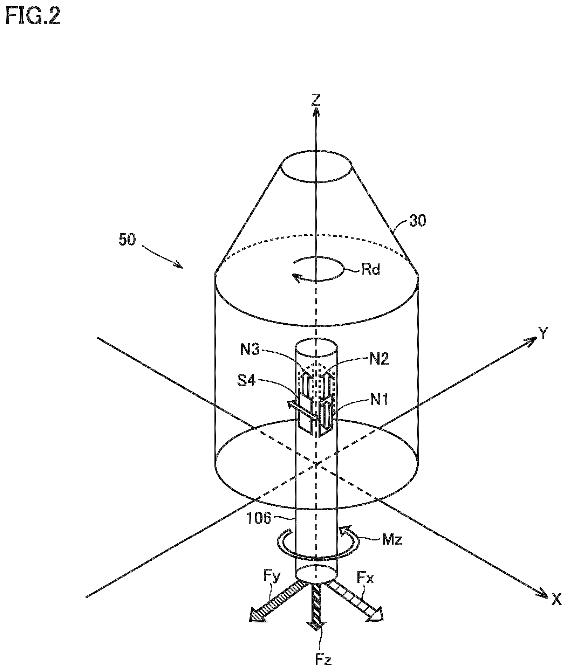

Fig. 2 is a perspective view of milling tool 50. The Z-axis shown in Fig. 2 is the rotation axis of milling tool 50. In other words, milling tool 50 rotates about the Z-axis as motor 20 is driven. Milling tool 50 rotates in a rotation direction Rd corresponding to a clockwise direction when viewed from the side of the positive direction along the Z-axis. An X-axis and a Y-axis perpendicular to each other are also perpendicular to the Z-axis. In the following description, the positive direction along the Z-axis in each figure may be referred to as an upper surface side, and the negative direction along the Z-axis in each figure may be referred to as a lower surface side.

As described above, milling tool 50 that is rotating comes into contact with the surface of the workpiece to scrape off the surface of the workpiece. As milling tool 50 comes into contact with the workpiece, an external force acts on milling tool 50. As shown in Fig. 2, the external forces acting on milling tool 50 by the contact between milling tool 50 and the workpiece include: external forces Fx, Fy, and Fz respectively acting in the X-axis direction, the Y-axis direction, and the Z-axis direction; and a load torque Mz acting in the direction for preventing rotation of milling tool 50. Since load torque Mz acts in the direction for preventing the rotation of milling tool 50, it acts in the rotation direction opposite to rotation direction Rd of milling tool 50. In other words, load torque Mz acts in a counterclockwise direction when viewed from the side of the positive direction along the Z-axis.

In Fig. 2, the direction in which external force Fx acts is shown as the positive direction along the X-axis, the direction in which external force Fy acts is shown as the negative direction along the Y-axis, and the direction in which external force Fz acts is shown as the negative direction along the Z-axis. As shown in Fig. 2, external forces Fx, Fy, and Fz are hatched differently. External forces Fx, Fy, and Fz may act in the directions opposite to the respective directions shown in Fig. 2.

Strain sensors N1 to N3 and S4 are disposed on the same X-Y plane. Strain sensors N1 to N3 and S4 are arranged at intervals of 90° in the circumferential direction of shaft portion 106 on the surface of shaft portion 106. In other words, when shaft portion 106 is viewed from the side of the negative direction along the Y-axis, strain sensors N1 and N3 are disposed in line symmetry with respect to the Z-axis. When shaft portion 106 is viewed from the side of the positive direction along the X-axis, strain sensors N2 and S4 are disposed in line symmetry with respect to the Z-axis.

Strain sensors N1 to N3 each have measurement sensitivity to the strain of shaft portion 106 in the Z-axis direction. On the other hand, strain sensor S4 has measurement sensitivity to the circumferential strain of shaft portion 106. The following describes a method of detecting external forces Fx, Fy, and Fz and load torque Mz with use of strain sensors N1 to N3 and S4.

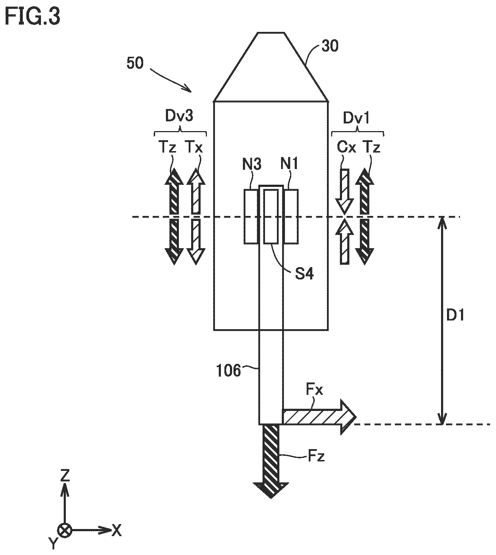

Fig. 3 is a diagram of milling tool 50 in Fig. 2 as viewed from the side of the negative direction along the Y-axis. Fig. 3 shows external forces Fx and Fz. Shaft portion 106 is a cantilever having: a fixed end on the side of the positive direction along the Z-axis; and a free end on the side of the negative direction along the Z-axis on which the cutting portion is formed. Thus, when external force Fx acts on milling tool 50, a bending moment occurs. The magnitude of the bending moment is determined from the magnitude of external force Fx and also from a distance D1 between strain sensors N1 and N3 and the free end of shaft portion 106 in the Z-axis direction.

The bending moment acts to deform shaft portion 106 into a slightly warped state so as to protrude in the negative direction along the X-axis. In other words, shaft portion 106 is warped by external force Fx. The bending moment generates a compressive stress Cx and a tensile stress Tx as bending stress according to the cross-sectional coefficient of shaft portion 106. In Fig. 3, compressive stress Cx and tensile stress Tx caused by external force Fx are represented by the same hatch pattern as the pattern for external force Fx.

Strain sensor N1 disposed in shaft portion 106 on the side of the positive direction along the X-axis has measurement sensitivity to compressive stress Cx. Strain sensor N1 has measurement sensitivity also to a tensile stress Tz caused by external force Fz. In Fig. 3, tensile stress Tz caused by external force Fz is represented by the same hatch pattern as the pattern for external force Fz. Thus, strain sensor N1 detects the resultant force of compressive stress Cx and tensile stress Tz. In other words, a detection value Dv1 from strain sensor N1 is equal to the resultant force of compressive stress Cx and tensile stress Tz. Strain sensor N1 transmits detection value Dv1 to management device 10.

Similarly to strain sensor N1, strain sensor N3 has measurement sensitivity to tensile stress Tx caused by external force Fx in addition to tensile stress Tz caused by external force Fz. Thus, a detection value Dv3 from strain sensor N3 is equal to the resultant force of tensile stresses Tx and Tz. Strain sensor N3 transmits detection value Dv3 to management device 10.

Management device 10 calculates the values of tensile stress Tz, tensile stress Tx, and compressive stress Cx from: detection value Dv1 indicating the resultant force of compressive stress Cx and tensile stress Tz; and detection value Dv3 indicating the resultant force of tensile stresses Tx and Tz. Strain sensors N1 and N3 are disposed in line symmetry with respect to the Z-axis on the same X-Y plane, and compressive stress Cx and tensile stress Tx each are a bending stress caused based on the same bending moment. Accordingly, compressive stress Cx and tensile stress Tx have the same stress.

Management device 10 calculates the difference between detection values Dv1 and Dv3 to calculate the magnitude of each of compressive stress Cx and tensile stress Tx. The magnitude of each of compressive stress Cx and tensile stress Tx varies depending on the bending moment determined from the magnitude of external force Fx and distance D1. In other words, management device 10 can calculate the magnitude of external force Fx from distance D1 and the magnitudes of compressive stress Cx and tensile stress Tx.

Further, after calculating the magnitudes of compressive stress Cx and tensile stress Tx, management device 10 can also calculate the magnitude of tensile stress Tz by processing of subtracting the magnitude of compressive stress Cx from detection value Dv1 or subtracting the magnitude of tensile stress Tx from detection value Dv3. Since tensile stress Tz is caused by external force Fz, management device 10 can calculate the magnitude of external force Fz based on the magnitude of tensile stress Tz. In this way, management device 10 calculates the magnitudes of external forces Fx and Fz from detection values Dv1 and Dv3 of respective strain sensors N1 and N3.

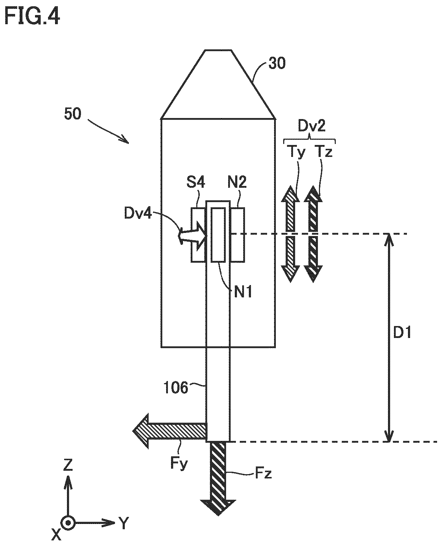

Fig. 4 is a diagram of milling tool 50 in Fig. 2 as viewed from the side of the positive direction along the X-axis. Fig. 4 shows external forces Fy and Fz generated by contact between milling tool 50 and the workpiece. As described above, strain sensor N2 has measurement sensitivity in the Z-axis direction.

As in the case where shaft portion 106 protrudes in the negative direction along the X-axis by the bending moment caused based on external force Fx, external force Fy causes a bending moment that causes shaft portion 106 to protrude in the positive direction along the Y-axis. In other words, strain sensor N2 disposed on shaft portion 106 on the side of the positive direction along the Y-axis detects the resultant force of tensile stress Ty and tensile stress Tz as a detection value Dv2.

As described with reference to Fig. 3, management device 10 calculates the magnitude of tensile stress Tz from detection values Dv1 and Dv3 of respective strain sensors N1 and N3. Management device 10 can calculate the magnitude of tensile stress Ty by subtracting tensile stress Tz from detection value Dv2. Similarly to the calculation of the magnitude of external force Fx, management device 10 can calculate the magnitude of external force Fy from the magnitude of tensile stress Ty and distance D1.

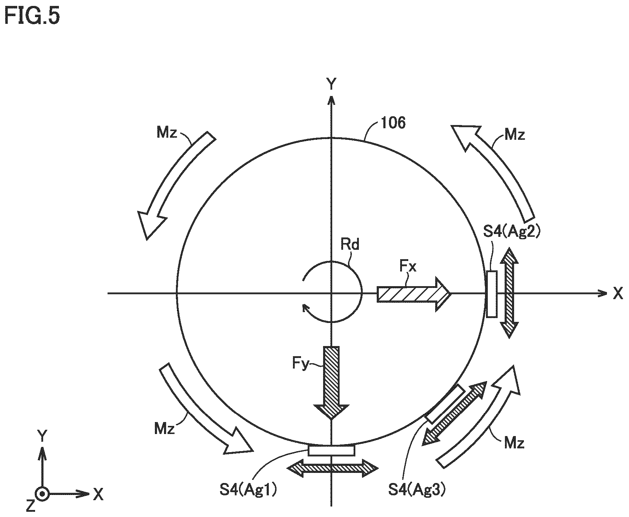

Fig. 5 is a diagram of shaft portion 106 in Fig. 2 as viewed from the side of the positive direction along the Z-axis. Referring to Fig. 5, the detection value from strain sensor S4 will be described. Strain sensor S4 has measurement sensitivity in the circumferential direction of tool holder 30. Thus, when milling tool 50 comes into contact with the workpiece, load torque Mz acts on tool holder 30 in the rotation direction opposite to rotation direction Rd of milling tool 50 and tool holder 30. In other words, as long as milling tool 50 that is rotating is in contact with the workpiece, the detection value from strain sensor S4 includes load torque Mz.

As described above, external forces Fx and Fy act on milling tool 50 that comes into contact with the workpiece. External forces Fx and Fy act in the direction along the X-Y plane similarly to load torque Mz. Thus, the detection value from strain sensor S4 includes at least one of external forces Fx and Fy in addition to load torque Mz.

The arrangement of strain sensor S4 along the X-Y plane varies according to the rotation angle of tool holder 30. For example, as shown in Fig. 5, strain sensor S4 in an arrangement Ag1 has measurement sensitivity to external force Fx since the direction of measurement by strain sensor S4 is parallel to the X-axis direction. Strain sensor S4 in an arrangement Ag2 has measurement sensitivity to external force Fy since the direction of measurement by strain sensor S4 is parallel to the Y-axis direction. Further, strain sensor S4 in an arrangement Ag3 has measurement sensitivity to both external forces Fx and Fy since the direction of measurement by strain sensor S4 intersects with both the X-axis direction and the Y-axis direction. Strain sensor S4 detects a resultant force of external forces Fx and Fy and load torque Mz.

As described with reference to Figs. 3 and 4, management device 10 calculates the magnitudes of external forces Fx and Fy based on detection values Dv1 to Dv3 from respective strain sensors N1 to N3. Management device 10 can calculate load torque Mz by removing the influences of external forces Fx and Fy from the detection value of strain sensor S4. Thus, in the present embodiment, the magnitudes of external forces Fx, Fy, and Fz and load torque Mz can be calculated by strain sensors N1 to N3 each having the measurement sensitivity in the Z-axis direction and strain sensor S4 having the measurement sensitivity in the circumferential direction of shaft portion 106.

In state detection system 100, external forces Fx, Fy, and Fz and load torque Mz may be calculated not only by the above-described method but also by other methods. In an aspect, state detection system 100 may be configured to have a total of six strain sensors including: three strain sensors each having the measurement sensitivity in the circumferential direction; and three strain sensors each having the measurement sensitivity in the Z-axis direction, or may be configured to have a total of five strain sensors including: three strain sensors each having the measurement sensitivity in the circumferential direction; and two strain sensors each having the measurement sensitivity in the Z-axis direction. In this way, load torque Mz and the like can be directly detected by increasing the number of strain sensors. Thus, in state detection system 100, the computation processing performed by management device 10 can be reduced.

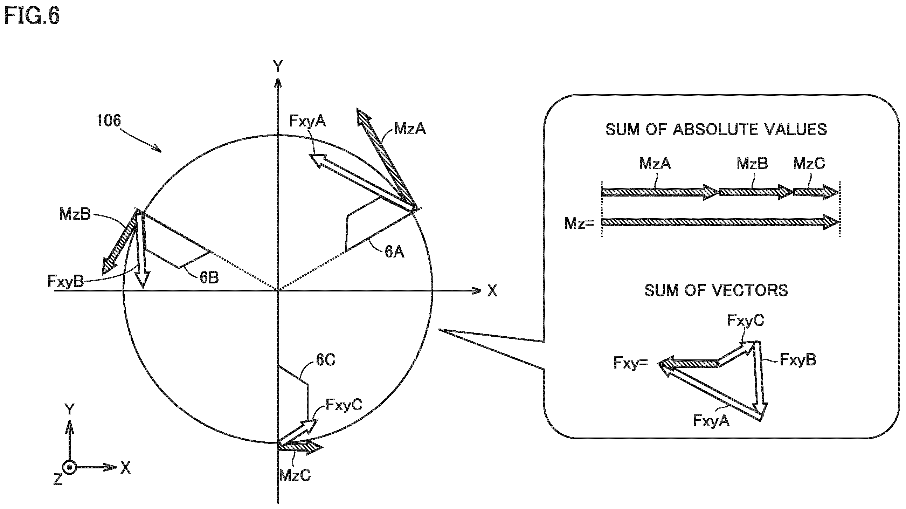

Fig. 6 is a diagram of the free end of shaft portion 106 in Fig. 2 as viewed from the side of the positive direction along the Z-axis. In the present embodiment, milling tool 50 has three cutting portions 6A, 6B, and 6C. External forces Fx, Fy, and Fz and load torque Mz described with reference to Figs. 1 to 5 occur when each of cutting portions 6A to 6C comes into contact with the workpiece.

In other words, load torque Mz calculated using strain sensor S4 is a resultant force of a load torque MzA acting on cutting portion 6A, a load torque MzB acting on cutting portion 6B, and a load torque MzC acting on cutting portion 6C as shown in Fig. 6. Since all of load torques MzA, MzB, and MzC act in the same circumferential direction, load torque Mz calculated using strain sensor S4 is a value obtained by summing the absolute values of load torques MzA, MzB, and MzC.

On the other hand, each of external forces Fx and Fy are calculated as a sum of vectors rather than a sum of the absolute values of the external forces generated in the respective cutting portions. Thus, the external forces generated in the respective cutting portions may cancel each other out. In the following description, the resultant force of external forces Fx and Fy is referred to as an "external force Fxy". As shown in Fig. 6, an external force FxyA acts on cutting portion 6A, an external force FxyB acts on cutting portion 6B, and an external force FxyC acts on cutting portion 6C.

External forces Fx and Fy act in the direction along the X-Y plane. Thus, as shown in Fig. 6, external force Fxy acting on the entire milling tool 50 is the sum of vectors indicating external forces FxyA, FxyB, and FxyC. Therefore, even when milling tool 50 is in contact with the workpiece, external forces FxyA, FxyB, and FxyC respectively acting on cutting portions 6A, 6B, and 6C cancel each other out, so that external force Fxy acting on the entire milling tool 50 may become "0". In other words, there may be a case where external force Fxy seemingly does not act on the entire milling tool 50 though external forces FxyA, FxyB, and FxyC respectively act on cutting portions 6A, 6B, and 6C.

Although load torque Mz is actually a value obtained by multiplying the component force in the tangential direction of external force Fxy by the radius of milling tool 50, each arrow extending from the tangential direction is described as load torque Mz for ease of description in Fig. 6.

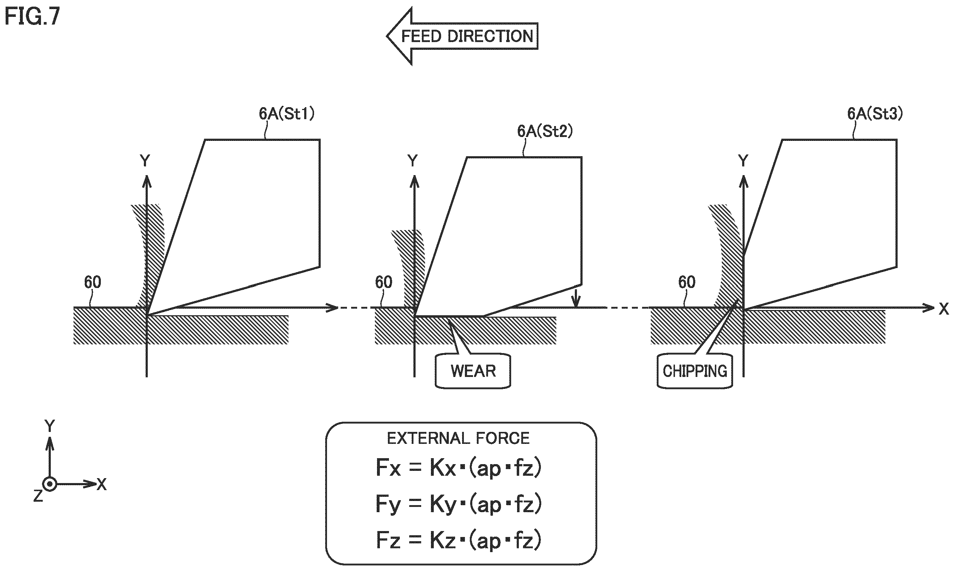

Fig. 7 is a diagram showing the relation between external forces Fx, Fy, and Fz and the state of the cutting portion. Fig. 7 shows cutting portions 6A in respective states St1, St2, and St3. In state St1, cutting portion 6A has no problem and thus can appropriately perform cutting. In state St2, the cutting edge of cutting portion 6A is worn. In state St3, the cutting edge of cutting portion 6A is chipped. Fig. 7 shows a workpiece 60 whose surface has been scraped off.

External force Fx caused by the contact between workpiece 60 and cutting portion 6A is determined from a specific cutting resistance Kx and the cutting area. Specific cutting resistance Kx is a resistance in the X-axis direction based on the state of the cutting portion. The specific cutting resistance has different values in the X-, Y-, and Z-axis directions. The cutting area is determined from a depth of cut ap and a feed rate fz.

As shown in the lower part in Fig. 7, external force Fx is a value obtained by multiplying specific cutting resistance Kx, depth of cut ap, and feed rate fz. Further, external force Fy is also similarly a value obtained by multiplying a specific cutting resistance Ky in the Y-axis direction, depth of cut ap, and feed rate fz. External force Fz is also similarly a value obtained by multiplying a specific cutting resistance Kz indicating the state of the cutting portion in the Z-axis direction, depth of cut ap, and feed rate fz. Since each of specific cutting resistances Kx, Ky, and Kz varies depending on the state of the cutting edge in each axis direction, the values of specific cutting resistances Kx, Ky, and Kz are different from one another.

### <Experimental Examples of Wear of Tool>

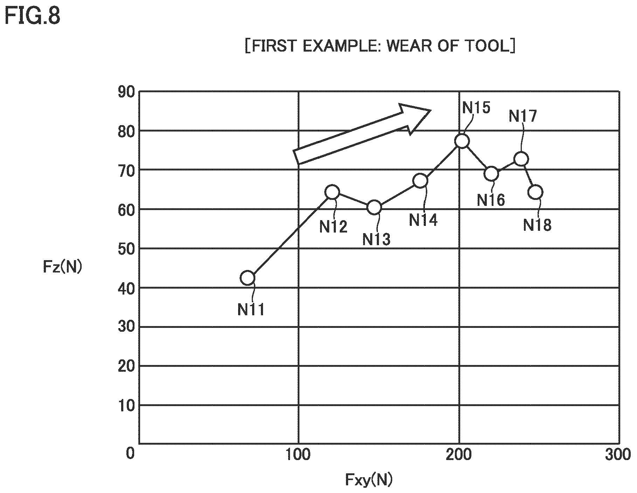

Referring to Figs. 8 to 10, the following describes an experimental example in which the state of wear of milling tool 50 is detected. Figs. 8 to 10 show the results of the experiment performed under the following machining conditions. The material of the workpiece is carbon steel (S50C). Milling tool 50 is an end mill with four cutting edges. The tool diameter is ϕ6 mm. The cutting speed is 60 m/min. The feed rate per cutting portion is 0.015 mm/t (tooth). The amount of cut in the axis direction is 1 mm. The amount of cut in the radial direction is 2.4 mm.

Fig. 8 is the first example of a graph showing the state of milling tool 50. In the graph of the first example shown in Fig. 8, the vertical axis represents external force Fz while the horizontal axis represents external force Fxy. Fig. 8 shows plots N11 to N18. Each of plots N11 to N18 indicates external forces Fz and Fxy at a specific timing that are calculated by the method described with reference to Figs. 2 to 6.

Each of plots N11 to N18 is a value detected in a duration for which motor 20 rotates milling tool 50 to cut the workpiece, and is detected in the order of plots N11 to N18. Plot N11 is a value detected at the earliest time, and plot N18 is a value detected at the latest time. In other words, at the timing when plot N18 is detected, the number of times of cutting is largest and the cutting time is longest as compared with the timings when other plots are detected. Thus, milling tool 50 wears more at the timing when plot N18 is detected than at the timing when other plots are detected.

As shown in plots N11 to N18 in Fig. 8, as the number of times of cutting increases and the cutting time lengthens, the wear of milling tool 50 progresses, and both external forces Fz and Fxy tend to increase. As shown in state St2 in Fig. 7, such progress of wear increases the area of contact between workpiece 60 and milling tool 50. The increased area of contact increases the time of contact and the frictional force between milling tool 50 and workpiece 60, with the result that external forces Fz and Fxy also increase.

In other words, each plot moves in the upper right direction on the graph as wear progresses. The cutting area is independently determined irrespective of the state of the cutting edge. Further, since the cutting portion repeatedly comes into contact with workpiece 60, the size of the cutting area may vary at each contact between the cutting portion and workpiece 60. Thus, external forces Fz and Fxy may decrease depending on the size of the cutting area even in the state in which wear of the cutting edge progresses. In view of the entire tendency of the movement from plot N1 1 to plot N18, however, each plot moves in the upper right direction on the graph.

From the above, the user can estimate the degree of progress of wear based on the direction and amount of the movement of each plot on the graph shown in Fig. 8. In other words, the state detection system can visually display, to the user, the degree of progress of the wear indicating the state of milling tool 50. More specifically, state detection system 100 according to the present embodiment allows the user to recognize the state of wear of milling tool 50 based on the tendency of the movement direction of each plot and the amount of movement of each plot. Thereby, the user can easily predict the timing to replace milling tool 50.

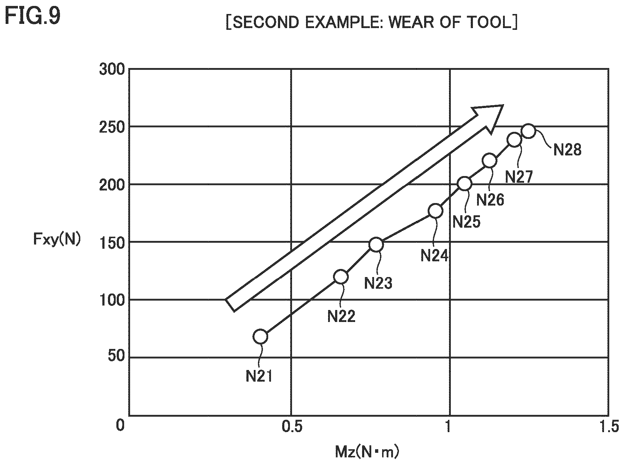

Fig. 9 is the second example of the graph showing the state of milling tool 50. In the graph of the second example shown in Fig. 9, the vertical axis represents external force Fxy while the horizontal axis represents load torque Mz. Fig. 9 shows plots N21 to N28. Plots N21 to N28 are detected in the order of plots N21 to N28 similarly to plots N11 to N18. In other words, wear progresses most at the timing when plot N28 is detected, among plots N21 to N28.

As shown in plots N21 to N28 in Fig. 9, when the number of times of cutting increases and the cutting time lengthens, the wear of milling tool 50 progresses, and both external force Fxy and load torque Mz tend to increase. As shown in state St2 in Fig. 7, when the wear progresses, the area of contact between the workpiece and milling tool 50 increases. The increased area of contact leads to increased frictional force, which also increases the load torque acting in the direction for preventing the rotation of milling tool 50. Therefore, as shown in Fig. 9, when wear progresses, load torque Mz also increases, and each plot in Fig. 9 also tends to move in the upper right direction on the graph.

In this way, state detection system 100 according to the present embodiment allows the user to recognize the state of wear of milling tool 50 based on the tendency of the movement direction of each plot and the amount of movement of each plot also in the graph in Fig. 9 in which the vertical axis represents external force Fxy and the horizontal axis represents load torque Mz.

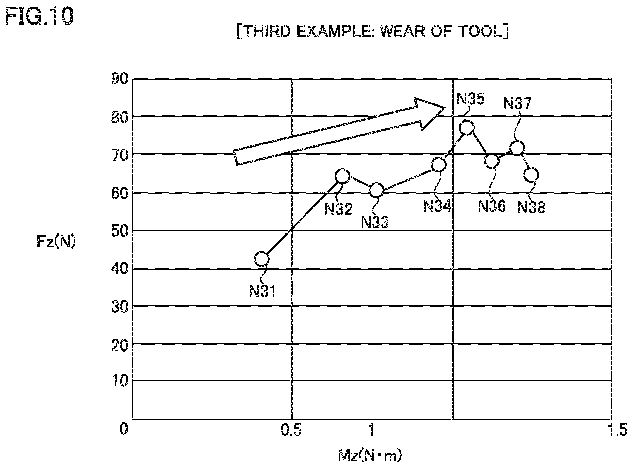

Fig. 10 is the third example of the graph showing the state of milling tool 50. In the graph of the third example shown in Fig. 10, the vertical axis represents external force Fz while the horizontal axis represents load torque Mz. Fig. 10 shows plots N31 to N38. Plots N31 to N38 are detected in the order of plots N31 to N38 similarly to plots N11 to N18. In other words, wear progresses most at the timing when plot N38 is detected, among plots N31 to N38. Also in the graph in Fig. 10, as wear progresses, external force Fz and load torque Mz increase, and thus, each plot in Fig. 10 also tend to move in the upper right direction on the graph.

In this way, state detection system 100 according to the present embodiment allows the user to recognize the state of wear of milling tool 50 based on the tendency of the movement direction of each plot and the amount of movement of each plot also in the graph in Fig. 10 in which the vertical axis represents external force Fz and the horizontal axis represents load torque Mz.

Further, when a plot is detected in a range not corresponding to a predetermined normal region, state detection system 100 may detect occurrence of an abnormality and cause display device 40 to display the result of detection. More specifically, experimental machining is performed using a specific shape of the milling tool under a specific machining condition to acquire, in advance, a range in which each plot is detected according to wear of the tool in the graphs in Figs. 8 to 10. In other words, state detection system 100 acquires, in advance, the range of each plot moving when the wear progresses normally. Then, in the case where machining is newly started using a new milling tool having the same shape under the same machining condition, it is determined whether or not the plot detected for this new milling tool exceeds the previously acquired range of each plot moving when wear progresses normally. When a plot is detected in a range different from the range of each plot moving when wear progresses normally, management device 10 determines that an abnormality occurs, and causes display device 40 to display an indication that an abnormality occurs.

Each of the graphs in Figs. 8 to 10 shows at least two relations among external forces Fz and Fxy and load torque Mz. More specifically, the graph in Fig. 8 shows the relation between external forces Fz and Fxy, the graph in Fig. 9 shows the relation between external force Fxy and load torque Mz, and the graph in Fig. 10 shows the relation between external force Fz and load torque Mz. The information shown as graphs in Figs. 8 to 10 is an example of the "first information" in the present disclosure.

In state detection system 100 according to the present embodiment, not only one of the graphs in Figs. 8 to 10 is displayed, but two of the graphs in Figs. 8 to 10 may also be simultaneously displayed. In other words, management device 10 may cause display device 40 to display the graphs in Figs. 8 and 9. Further, management device 10 may cause display device 40 to display the graphs in Figs. 9 and 10. Alternatively, management device 10 may cause display device 40 to display the graphs in Figs. 8 and 10. This allows display device 40 to display graphs including all the information about external forces Fz and Fxy and load torque Mz. Thus, in state detection system 100, the information indicating the more accurate state of milling tool 50 can be displayed to the user. When two graphs are displayed in this way, one graph is an example of the "first information" and the other graph is an example of the "second information". In state detection system 100, all of the three graphs in Figs. 8 to 10 may be displayed.

In the example described above in the present embodiment, the relation among external forces Fz and Fxy and load torque Mz is displayed as graphs, but the magnitudes of external forces Fz and Fxy and load torque Mz may be simply displayed, for example, as numerical values in a table format. Further, two-dimensional graphs are displayed to the user in the example described above, but, in a certain aspect, state detection system 100 may display the three relations among external forces Fz and Fxy and load torque Mz by a three-dimensional stereoscopic graph. In such a stereoscopic graph, for example, the X-axis represents external force Fz, the Y-axis represents external force Fxy, and the Z-axis represents load torque Mz.

### <Experimental Examples about Chipping of Cutting Edge>

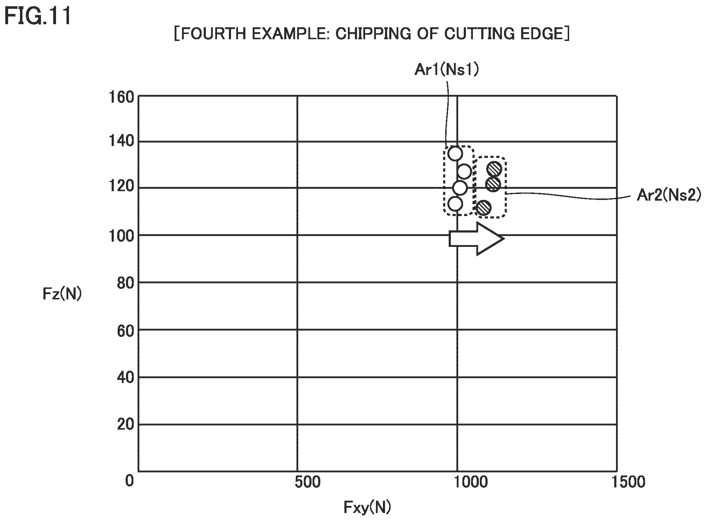

Referring to Figs. 11 to 13, the following describes experimental examples in which the state of the chipped cutting edge of milling tool 50 is detected. Figs. 11 to 13 show results of the experiments performed under the following machining conditions. The material of the workpiece is steel use stainless (SUS304). Milling tool 50 is an end mill with four cutting edges. The tool diameter is ϕ16 mm. The cutting speed is 80 m/min. The feed rate per cutting portion is 0.10 mm/t (tooth). The amount of cut in the axis direction is 2 mm. The amount of cut in the radial direction is 10 mm.

Fig. 11 is the fourth example of the graph showing the state of milling tool 50. In the graph of the fourth example shown in Fig. 11, the vertical axis represents external force Fz while the horizontal axis represents external force Fxy. Fig. 11 shows a plot group Ns1 included in a region Ar1 and a plot group Ns2 included in a region Ar2. Plot group Ns1 shows values detected in the state in which the cutting edge is not chipped. Plot group Ns2 shows values detected in the state in which the cutting edge is chipped.

As shown in plot groups Ns1 and Ns2 in Fig. 11, external force Fxy increases due to chipping of the cutting edge. In other words, the region where values are plotted moves in the right direction on the graph based on the state in which the cutting edge has been chipped. The chipping of the cutting edge does not progress with time as the tool wears, but causes sudden breakage. Thus, before and after the cutting edge is chipped, the region where values are plotted moves from region Ar1 to region Ar2.

In this way, state detection system 100 according to the present embodiment allows the user to recognize whether or not the cutting edge of milling tool 50 has been chipped, based on the state in which region Ar1 where values are plotted has changed to another region Ar2. Thereby, the user can determine whether or not milling tool 50 needs to be repaired.

In the example of chipping of the cutting edge, the direction in which each plot moves is different depending on the position and shape of chipping of the cutting edge, and thus, there is no tendency in the movement direction of each plot. Therefore, in state detection system 100 according to the present embodiment, for example, the k-nearest neighbor algorithm is used to determine whether or not values have been plotted to a different region from region Ar1 where values are plotted in the state in which the cutting edge is not chipped. In other words, when the newly plotted values are clustered within a range different from the range of the past plots, management device 10 determines that the cutting edge has been damaged, and causes display device 40 to display this determination. Thereby, in state detection system 100, the chipped state of the cutting edge can be detected, and the detection result can be displayed to the user. As will be described later, management device 10 may determine whether or not an abnormality occurs in the cutting edge by calculation using the tool shape and the machining condition, or by comparison with a normal region obtained by a test performed in advance.

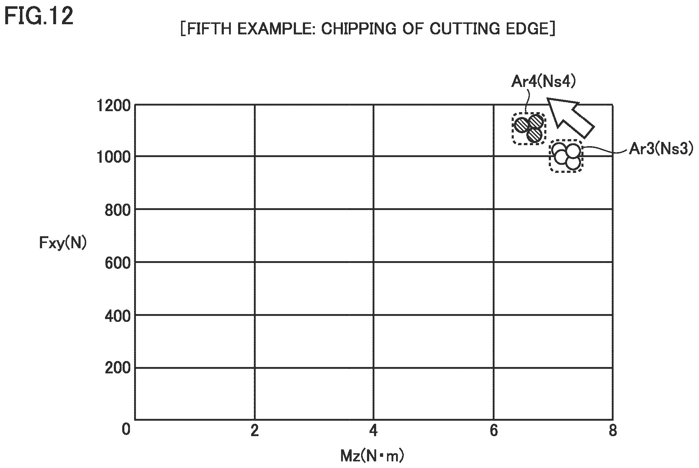

Fig. 12 is the fifth example of the graph showing the state of milling tool 50. In the graph of the fifth example shown in Fig. 12, the vertical axis represents external force Fxy while the horizontal axis represents load torque Mz. Fig. 12 shows a plot group Ns3 included in a region Ar3 and a plot group Ns4 included in a region Ar4. Plot group Ns3 shows values detected in the state in which the cutting edge is not chipped. Plot group Ns4 shows values detected in the state in which the cutting edge is chipped.

As shown in plot groups Ns3 and Ns4 in Fig. 12, external force Fxy increases and load torque Mz decreases due to the influences of the position and shape of the chipped cutting edge in the example in Fig. 12. In other words, the region where values are plotted moves in the upper left direction on the graph based on the state in which the cutting edge has been chipped. In this way, state detection system 100 according to the present embodiment allows the user to recognize whether or not the cutting edge of milling tool 50 has been chipped, based on the state in which region Ar3 where values are plotted has changed to another region Ar4 also in the graph in Fig. 12 in which the vertical axis represents external force Fxy and the horizontal axis represents load torque Mz.

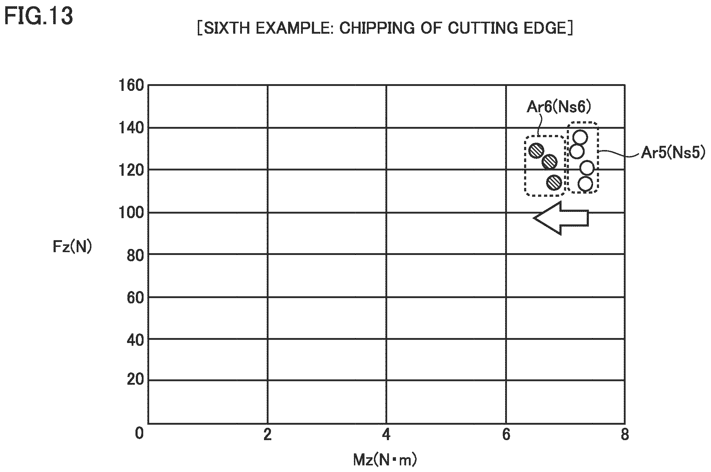

Fig. 13 is the sixth example of the graph showing the state of milling tool 50. In the graph of the sixth example shown in Fig. 13, the vertical axis represents external force Fz while the horizontal axis represents load torque Mz. Fig. 13 shows a plot group Ns5 included in a region Ar5 and a plot group Ns6 included in a region Ar6. Plot group Ns5 shows values detected in the state in which the cutting edge is not chipped. Plot group Ns6 shows values detected in the state in which the cutting edge is chipped.

As shown in plot groups Ns5 and Ns6 in Fig. 13, load torque Mz decreases due to the influences of the position and shape of the chipped cutting edge in the example in Fig. 12. In other words, each plot moves in the left direction on the graph based on the state in which the cutting edge has been chipped. In this way, state detection system 100 according to the present embodiment allows the user to recognize whether or not the cutting edge of milling tool 50 has been chipped, based on the state in which region Ar5 where values are plotted has changed to another region Ar6 also in the graph in Fig. 13 in which the vertical axis represents external force Fz and the horizontal axis represents load torque Mz.

### <Elimination of Influence of Cutting Area>

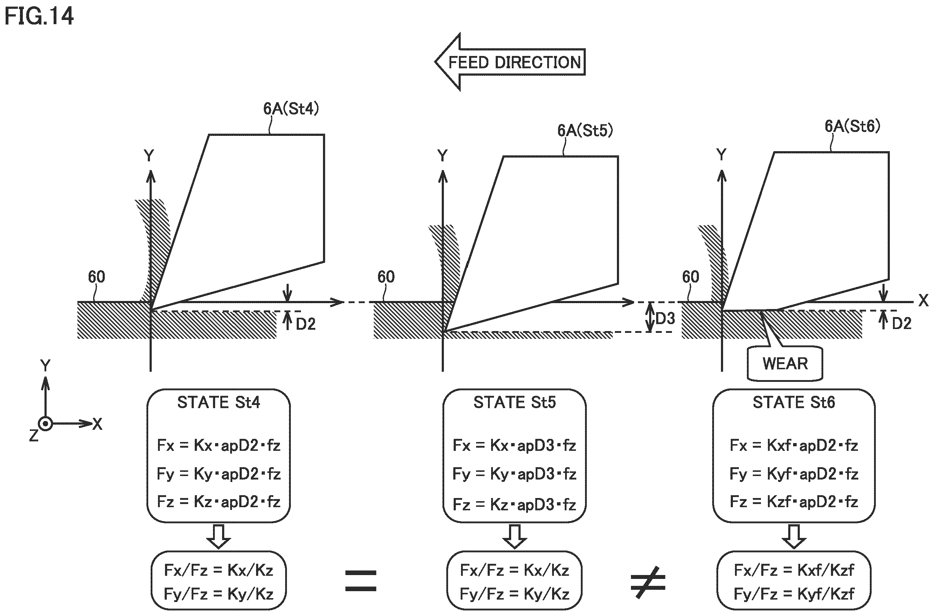

Fig. 14 is a diagram for illustrating the relation between an external force, a specific cutting resistance, and a cutting area. As described above, the cutting portion repeatedly comes into contact with workpiece 60, so that the cutting area may vary in size. Even when specific cutting resistance K changes due to the wear of the tool or chipping of the cutting edge, but if the cutting area varies in size, there is a possibility that external forces Fx, Fy, and Fz and load torque Mz may be cancelled out such that specific cutting resistance K seemingly does not change. Thus, the following describes a method of eliminating the influence of the cutting area.

Fig. 14 shows cutting portions 6A in respective states St4, St5, and St6. In each of states St4 and St5, cutting portion 6A has no problem and can appropriately perform cutting. In state St6, the cutting edge of cutting portion 6A is worn.

In each of states St4 and St6, depth of cut ap of cutting portion 6A is a distance D2. In state St5, depth of cut ap of cutting portion 6A is a distance D3. Distance D3 is longer than distance D2. Feed rates fz in all states St4, St5, and St6 show the same value.

As described with reference to Fig. 7, external force Fx is a value obtained by multiplying specific cutting resistance Kx indicating the state of the cutting portion, depth of cut ap, and feed rate fz. Specific cutting resistance Kx is determined based on the state of the cutting portion irrespective of depth of cut ap and feed rate fz. On the other hand, depth of cut ap and feed rate fz vary depending on the state of contact between the cutting portion and workpiece 60 irrespective of the state of the cutting portion.

In state St4, external force Fx is determined based on specific cutting resistance Kx indicating an appropriate state in which the cutting portion is neither worn nor chipped, a depth of cut apD2 of the cutting edge for cutting the workpiece by the depth of distance D2, and feed rate fz. In state St5, external force Fx is determined based on specific cutting resistance Kx indicating an appropriate state in which the cutting portion is neither worn nor chipped, a depth of cut apD3 of the cutting edge for cutting the workpiece by the depth of distance D3, and feed rate fz. In state St6, external force Fx is determined based on a specific cutting resistance Kxf at which the cutting portion is worn, depth of cut apD2 of the cutting edge for cutting the workpiece by the depth of distance D2, and feed rate fz. As shown in Fig. 14, external forces Fy and Fz in each state are also determined in the same manner as external force Fx.

As shown in the lower part of state St4 in Fig. 14, the ratio of external force Fx to external force Fz in state St4 shows the ratio of specific cutting resistance Kx to specific cutting resistance Kz. In other words, each of external forces Fz and Fx includes depth of cut apD2 and feed rate fz. Thus, when external force Fx is divided by external force Fz, the influences of depth of cut apD2 and feed rate fz are removed. Accordingly, the ratio of external force Fx to external force Fz shows the ratio of specific cutting resistance Kx to specific cutting resistance Kz since the influences of depth of cut apD2 and feed rate fz are eliminated. In state St4, the ratio of external force Fy to external force Fz also shows the ratio of specific cutting resistance Ky to specific cutting resistance Kz since the influences of depth of cut apD2 and feed rate fz are similarly eliminated.

As shown in the lower part of state St5 in Fig. 14, the ratio of external force Fx to external force Fz in state St5 also shows the ratio of specific cutting resistance Kx to specific cutting resistance Kz, as in state St4. In other words, the influences of depth of cut apD3 and feed rate fz are removed by division. Thus, the ratio of external force Fx to external force Fz in state St5 is equal in value to the ratio of external force Fy to external force Fz in state St4.

On the other hand, as shown in the lower part of state St6 in Fig. 14, the ratio of external force Fx to external force Fz in state St6 is equal to the ratio of specific cutting resistance Kxf to a specific cutting resistance Kzf. Although the influences of depth of cut apD2 and feed rate fz are removed by division, specific cutting resistances Kxf and Kzf are different from specific cutting resistances Kx and Kz in states St4 and St5 due to wear of the cutting portion. Thus, the ratio of external force Fx to external force Fz in state St6 is different in value from the ratio of external force Fy to external force Fz in states St4 and St5.

In this way, in state detection system 100 according to the present embodiment, the values obtained by dividing external forces Fx, Fy, and Fz by each other are used to eliminate the influence of the cutting area, with the result that attention can be focused only on the change in a specific cutting resistance K. For example, by displaying a graph in which the vertical axis represents the ratio of external force Fx to external force Fz and the horizontal axis represents the ratio of external force Fy to external force Fz, management device 10 can display, to the user, the state of milling tool 50 excluding the influence of the cutting area. Note that the combination in which external forces Fx, Fy, and Fz are divided may be another combination as long as the influence of the cutting area is eliminated.

### <Elimination of Cutting Area with Use of Load Torque>

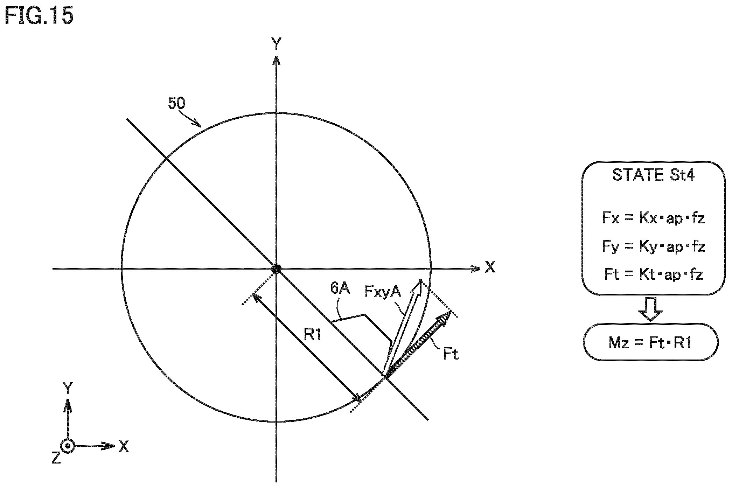

Fig. 15 is a diagram for illustrating the relation between the load torque and the cutting area. Load torque Mz, which is a force preventing rotation, shows a value obtained by multiplying an external force Ft generated in a tangential direction of milling tool 50 by a radius R1 of milling tool 50. In the above explanation with reference to Fig. 6, an arrow extending from the tangential direction of cutting portion 6A is defined as load torque MzA. However, load torque Mz is actually a value obtained by multiplying external force Ft as a component force in the tangential direction of external force FxyA by radius R1 of milling tool 50, as shown in Fig. 15.

Similarly to external forces Fx, Fy, and Fz, external force Ft is a value obtained by multiplying a specific cutting resistance Kt, depth of cut ap, and feed rate fz. In other words, load torque Mz includes depth of cut ap and feed rate fz. Thus, the influence of the cutting area can be eliminated by dividing load torque Mz by one of external forces Fx, Fy, and Fz.

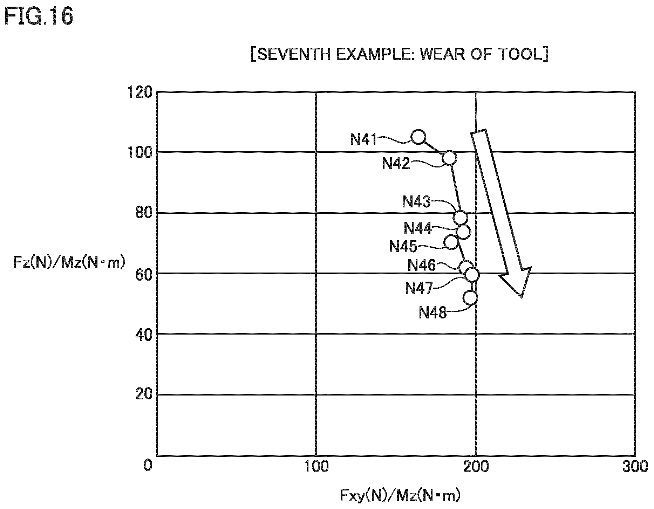

Fig. 16 is the seventh example of the graph showing the state of milling tool 50. In the graph of the seventh example shown in Fig. 16, the vertical axis represents the ratio of external force Fz to load torque Mz while the horizontal axis represents the ratio of external force Fxy to load torque Mz. Fig. 16 shows plots N41 to N48. Similarly to plots N11 to N18, plots N41 to N48 are detected in the order of plots N41 to N48. In other words, wear progresses most at the timing when plot N48 is detected, among plots N41 to N48.

In the graph shown in Fig. 16, the influence of the cutting area is eliminated from the values shown on the vertical axis and the horizontal axis, as described above. Thereby, the graph in Fig. 16 can more accurately represent the change in specific cutting resistance K.

In the example shown in Fig. 16, as wear progresses, the ratio of external force Fxy to load torque Mz decreases. In other words, the rate of increase in load torque Mz resulting from the progress of wear is greater than the rate of increase in external force Fxy. Further, as wear progresses, the ratio of external force Fxy to load torque Mz increases. The rate of increase in load torque Mz resulting from the progress of wear is smaller than the rate of increase in external force Fxy. Thus, as shown in Fig. 16, each plot tends to move in the lower right direction on the graph.

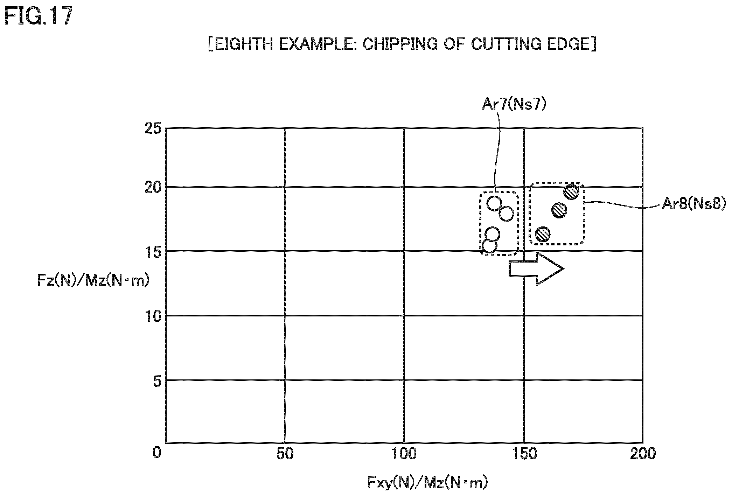

Fig. 17 is the eighth example of the graph showing the state of milling tool 50. In the graph of the eighth example shown in Fig. 17, the vertical axis represents the ratio of external force Fz to load torque Mz while the horizontal axis represents the ratio of external force Fxy to load torque Mz. Fig. 17 shows a plot group Ns7 included in a region Ar7 and a plot group Ns8 included in a region Ar8. Plot group Ns7 shows values detected in the state in which the cutting edge is not chipped. Plot group Ns8 shows values detected in the state in which the cutting edge is chipped.

As shown in plot groups Ns7 and Ns8 in Fig. 17, the ratio of external force Fxy to load torque Mz increases due to occurrence of chipping of the cutting edge. In other words, the region where values are plotted moves in the right direction on the graph based on the state in which the cutting edge has been chipped. In this way, state detection system 100 according to the present embodiment allows the user to recognize whether or not the cutting edge of milling tool 50 has been chipped, based on the state in which region Ar7 where values are plotted has changed to another region Ar8 also in the graph in Fig. 17 in which the vertical axis represents the ratio of external force Fz to load torque Mz and the horizontal axis represents the ratio of external force Fxy to load torque Mz.

In this way, in Figs. 16 and 17, state detection system 100 according to the present embodiment allows the user to recognize the state of wear of milling tool 50 and the chipping of the cutting edge also in the graphs in Figs. 16 and 17 in which the vertical axis represents external force Fz with respect to load torque Mz and the horizontal axis represents external force Fxy with respect to load torque Mz.

As described with reference to Fig. 6, load torque Mz is greater than "0" at all times as long as the cutting portion of milling tool 50 that is rotating is in contact with workpiece 60. On the other hand, each of external forces Fx, Fy, and Fz may be seemingly "0" since the external forces occurring at the respective cutting portions cancel each other out. In each of the examples shown in Figs. 16 and 17, the denominator of the value indicated by each of the vertical and horizontal axes is a load torque. Thus, the values indicated by the vertical and horizontal axes are not divided by "0", which prevents occurrence of the situation that the values indicated by the vertical and horizontal axes are divided by "0" and thus cannot be detected.

Strain sensors N1 to N3 and S4 are examples of the "first strain sensor to the fourth strain sensor" in the present disclosure.

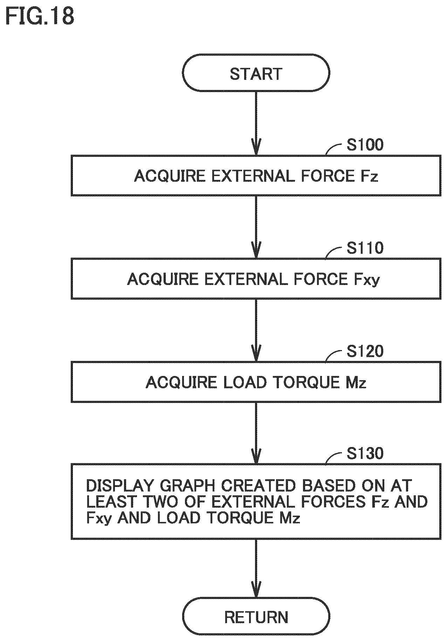

Fig. 18 is a flowchart illustrating a processing procedure in the present embodiment. Fig. 18 shows a processing procedure for displaying one of the graphs shown in Figs. 8 to 13, 16, and 17. The processing procedure shown in Fig. 18 is implemented as a result of execution of the program of storage device 230 by CPU 220 of management device 10.

Management device 10 acquires external force Fz (step S100). Then, management device 10 acquires external force Fxy (step S110). Further, management device 10 acquires load torque Mz (step S120). More specifically, in steps S100 to S120, management device 10 calculates external forces Fz and Fxy and load torque Mz with use of the detection values from strain sensors N1 to N3 and S4 as described with reference to Figs. 3 and 4.

Then, management device 10 displays a graph created based on at least two of external forces Fz and Fxy and load torque Mz (step S130). In other words, the management device displays one of the graphs in Figs. 8 to 13, 16, and 17.

### [Method of Creating Normal Region by Test performed in Advance]

In the description about the configuration in state detection system 100 according to the present embodiment, the k-nearest neighbor algorithm is used to determine whether or not values have been plotted to a different region from region Ar1 where values are plotted in the state in which the cutting edge is not chipped. However, the method of determining whether or not an abnormality has occurred is not limited to the method using the k-nearest neighbor algorithm. In the following, a method of creating a normal region on a graph will be described.

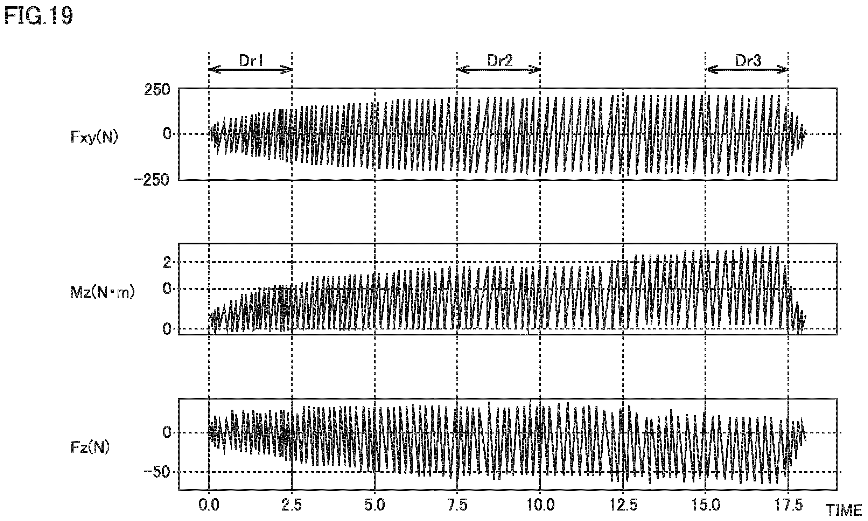

Fig. 19 is a diagram showing measurement results of a test for creating a normal region. Fig. 19 shows time-series data of each of external forces Fz and Fxy and load torque Mz. More specifically, Fig. 19 shows the values of external forces Fz and Fxy and load torque Mz in the duration from 0 second to 17.5 seconds.

Fig. 19 shows the measurement results of the test performed under the following machining conditions. The rotation speed of milling tool 50 is 2300 times/min. The feed rate is 500 mm/min. The amount of cut in the radial direction is 10 mm. In other words, each of cutting portions 6A to 6C cuts the workpiece so as to gradually increase the amount of cut from 0 mm to 10 mm.

As shown in Fig. 19, each of external forces Fz and Fxy and load torque Mz varies over time. In a duration Dr1, the amount of cut is 0 mm to 1 mm. In a duration Dr2, the amount of cut is 4 mm to 5 mm. In a duration Dr3, the amount of cut is 9 mm to 10 mm.

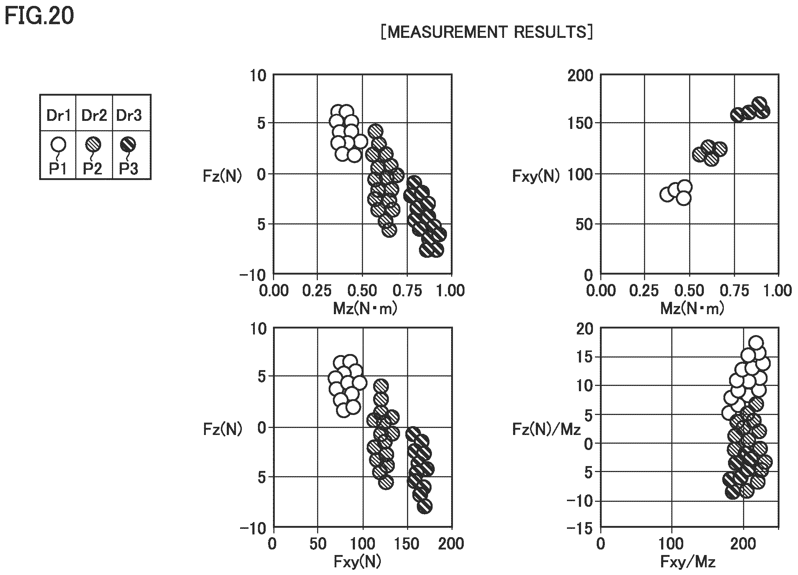

Fig. 20 is a diagram showing graphs based on the measurement result in Fig. 19. Fig. 20 shows four graphs including: a graph in which the vertical axis represents external force Fz while the horizontal axis represents load torque Mz; a graph in which the vertical axis represents external force Fxy while the horizontal axis represents load torque Mz; a graph in which the vertical axis represents external force Fz while the horizontal axis represents external force Fxy; and a graph in which the vertical axis represents the ratio of external force Fz to load torque Mz while the horizontal axis represents the ratio of external force Fxy to load torque Mz.

Each graph shows three types of plots, i.e., plots P1, P2, and P3. As shown in the upper left portion in Fig. 20, plot P1 relates to duration Dr1 in Fig. 19. Plot P2 relates to duration Dr2 in Fig. 19. Plot P3 relates to duration Dr3 in Fig. 19. In other words, in Fig. 20, the values of external forces Fz and Fxy and load torque Mz shown in Fig. 19 are shown as respective graphs for each duration.

In the example in Fig. 20, the actual measurement values of external forces Fz and Fxy and load torque Mz shown in Fig. 19 are not displayed as plots, but the moving averages of external forces Fz and Fxy and load torque Mz shown in Fig. 19 are displayed as plots. Thereby, the respective plots are arranged in clusters within a prescribed range on the graph within the same duration, as shown in Fig. 20. Further, in Fig. 19, the test is performed under the machining condition to gradually increase the amount of cut as described above. Thus, it can be said that the test is performed under different machining conditions in durations Dr1, Dr2, and Dr3.

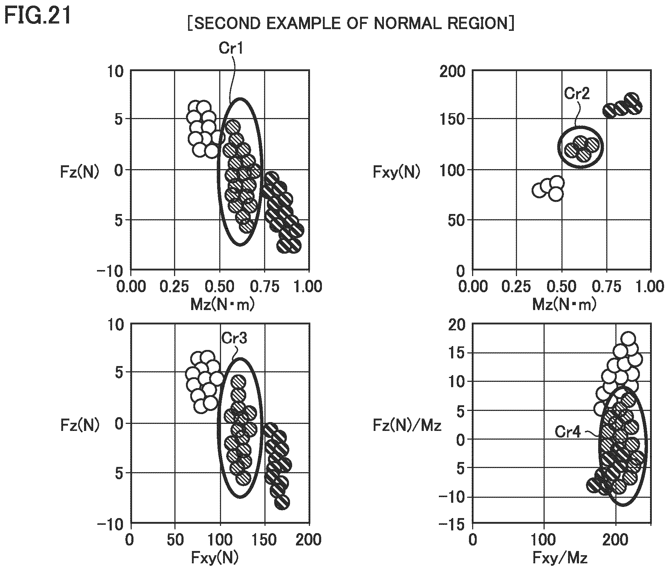

Fig. 21 is a diagram showing an example in which a normal region in duration Dr2 is set. Fig. 21 shows graphs similar to the four graphs shown in Fig. 20. Fig. 21 shows normal regions Cr1, Cr2, Cr3, and Cr4 superimposed on the respective four graphs. Normal regions Cr1 to Cr4 each are determined based on plot P2 in duration Dr2. Each of normal regions Cr1 to Cr4, for example, includes all plots P2 in duration Dr2 and is indicated by an ellipse or a circle centered on the average value of the set of plots P2. Normal regions Cr1 to Cr4 are determined by management device 10. Note that management device 10 may determine the minimum region including all the sets of plots P2 as normal regions Cr1 to Cr4 without using the average value of the set of the plots P2.

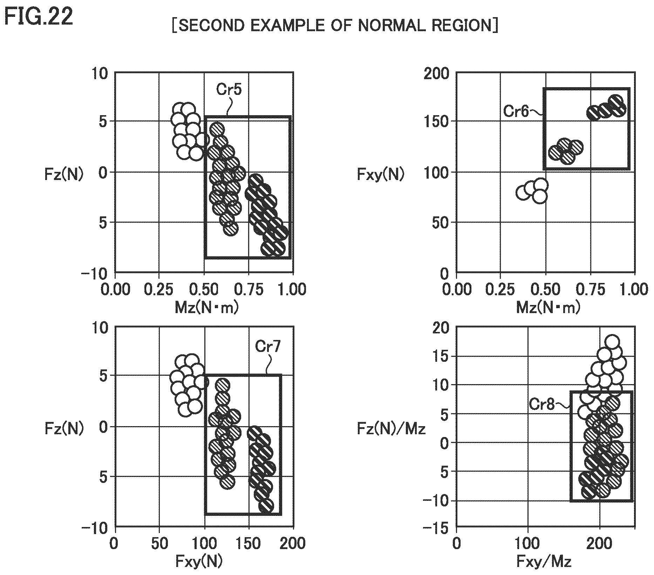

In this way, state detection system 100 acquires normal regions Cr1 to Cr4, where values are to be plotted, by performing the experimental machining performed with reference to Figs. 19 and 20. Thereafter, when the machining is performed under the machining conditions associated with duration Dr2, if a newly detected plot is not located in normal regions Cr1 to Cr4, it can be determined that an abnormality has occurred. In other words, when a plot is detected in a region other than normal regions Cr1 to Cr4, management device 10 can cause display device 40 to display an indication that an abnormality has occurred. Further, management device 10 may cause display device 40 to display four graphs and normal regions Cr1 to Cr4 shown in Fig. 22 in real time. Thereby, the user can visually grasp in real time whether or not each plot is located within the ranges of normal regions Cr1 to Cr4.

Fig. 22 is a diagram showing an example in which normal regions in durations Dr2 and Dr3 are set. Fig. 22 shows normal regions Cr5, Cr6, Cr7, and Cr8. Normal regions Cr5 to Cr8 are determined based on plot P2 in duration Dr2 and plot P3 in duration Dr3. Each of normal regions Cr5 to Cr8, for example, includes all plots P2 and P3 and has a rectangular shape centered on the average value of the sets of plots P2 and P3.

In this way, state detection system 100 acquires normal regions Cr5 to Cr8 by the experimental machining performed in Figs. 19 and 20. Thereafter, when machining is performed under the machining conditions associated with durations Dr2 and Dr3, whether or not an abnormality has occurred can be determined depending on whether or not newly detected plots are located within normal regions Cr5 to Cr8. As shown in Figs. 21 and 22, in state detection system 100, an appropriate normal region can be created for each machining condition.

In the example described with reference to Fig. 20, the actual measurement value in Fig. 19 is not used but the value of the moving average is used. In state detection system 100 in a certain aspect, however, the actual measurement value may be used or an average value, a maximum value, a standard deviation, or the like per unit time may be used. The unit time may be determined based on the rotation speed of milling tool 50. Further, in the above description of the present embodiment, the state of the milling tool is detected with use of external forces Fx, Fy, and Fxy. In state detection system 100 in a certain aspect, however, torques Mx, My, and Mxy generated in the respective axis directions may be used in place of external forces Fx, Fy, and Fxy.

### (Modifications)

In milling tool 50 in the present embodiment, shaft portion 106 is held with tool holder 30. In milling tool 50 in a modification, however, shaft portion 106 may be directly attached to a spindle of machine tool 70 without using a tool holder like milling tool 50 in the present embodiment. In this case, shaft portion 106 includes a housing.

Strain sensors N1 to N3 and S4 are accommodated inside the housing provided in shaft portion 106. Strain sensors N1 to N3 and S4 are arranged at equal intervals in the circumferential direction of shaft portion 106 similarly to milling tool 50 in the present embodiment. In this way, also in the case of milling tool 50 directly attached to the spindle without using a tool holder, strain sensors N1 to N3 and S4 are arranged inside the housing of shaft portion 106, so that management device 10 can acquire the external force and the load torque occurring in milling tool 50.

In the configuration described above in the present embodiment, management device 10 is provided separately from machine tool 70. However, management device 10 may be included in machine tool 70. In other words, management device 10 and machine tool 70 may be integrated with each other.

It should be understood that the embodiments disclosed herein are illustrative and non-restrictive in every respect. The scope of the present disclosure is defined by the terms of the claims, rather than the above description of the embodiments, and is intended to include any modifications within the meaning and scope equivalent to the terms of the claims.

### REFERENCE SIGNS LIST

6A to 6C cutting portion, 10 management device, 20 motor, 30 tool holder, 40 display device, 50 milling tool, 60 workpiece, 70 machine tool, 100 state detection system, Ag1 to Ag3 arrangement, Ar1 to Ar8 region, Cx compressive stress, D1 to D3 distance, Dv1 to Dv3 detection value, Ft, Fx, Fxy, FxyA to FxyC, Fy, Fz external force, K, Kt, Kx, Kxf, Ky, Kz, Kzf specific cutting resistance, Mz, MzA to MzC load torque, N1 to N3, S4 strain sensor, N11 to N18, N21 to N28, N31 to N38, N41 to N48, P1 to P3 plot, Ns1 to Ns8 plot group, R1 radius, Rd rotation direction, St1 to St6 state, Tx, Ty, Tz stress, ap, apD2, apD3 depth of cut, Cr1 to Cr8 normal region.

## Claims

1. A state detection system for a milling tool used for milling, the state detection system comprising:
a milling tool including a shaft portion, the milling tool being rotatable about a rotation axis of the shaft portion, the shaft portion having
a first end portion provided with a cutting portion for cutting a workpiece, and
a second end portion attached to a machine tool;
a plurality of sensors attached to the shaft portion to detect an external force acting on the milling tool;
a display device; and
a management device, wherein
the plurality of sensors are configured to detect
a first force acting on the milling tool in a first direction along the rotation axis,
a second force acting on the milling tool in a direction along a plane normal to the rotation axis, and
a load torque acting on the milling tool in a direction for preventing rotation of the milling tool, and
the management device is configured to cause the display device to display first information based on at least two of the first force, the second force, and the load torque.

2. The state detection system according to claim 1, wherein the management device is configured to cause the first information to be displayed with use of a graph.

3. The state detection system according to claim 1 or 2, wherein
in addition to the first information, the management device is configured to cause the display device to display second information based on at least two of the first force, the second force, and the load torque, and
the second information is different from the first information.

4. The state detection system according to claim 1, wherein the first information is information based on a ratio of the first force to the load torque and a ratio of the second force to the load torque.

5. The state detection system according to any one of claims 1 to 4, wherein
the plurality of sensors include
a first strain sensor, a second strain sensor, and a third strain sensor that detect a strain in the first direction, the first strain sensor, the second strain sensor, and the third strain sensor being attached to the shaft portion, and
a fourth strain sensor that detects a circumferential strain of the shaft portion, the fourth strain sensor being attached to the shaft portion.

6. A method of detecting a state of a milling tool used for milling,
the milling tool including a shaft portion, the milling tool being rotatable about a rotation axis of the shaft portion, the shaft portion having
a first end portion provided with a cutting portion for cutting a workpiece, and
a second end portion attached to a machine tool,
a plurality of sensors that detect an external force acting on the milling tool being attached to the shaft portion, the method comprising:
acquiring a first force with use of detection values from the plurality of sensors, the first force acting in a first direction along the rotation axis;
acquiring a second force with use of the detection values from the plurality of sensors, the second force acting in a direction along a plane normal to the rotation axis;
acquiring a load torque with use of the detection values from the plurality of sensors, the load torque acting in a direction for preventing rotation of the milling tool; and
causing first information to be displayed based on at least two of the first force, the second force, and the load torque.

7. A program for detecting a state of a milling tool used for milling,
the milling tool including a shaft portion, the milling tool being rotatable about a rotation axis of the shaft portion, the shaft portion having
a first end portion provided with a cutting portion for cutting a workpiece, and
a second end portion attached to a machine tool, and
a plurality of sensors that detect an external force acting on the milling tool being attached to the shaft portion,
the program causing a computer to perform:
acquiring a first force with use of detection values from the plurality of sensors, the first force acting in a first direction along the rotation axis;
acquiring a second force acting in a direction along a plane normal to the rotation axis;
acquiring a load torque acting in a direction for preventing rotation of the milling tool; and
causing first information to be displayed based on at least two of the first force, the second force, and the load torque.
